# FASCICULE DE BREVET EUROPEEN

(11) **EP 0 448 693 B1**
(45) Date de publication et mention de la délivrance du brevet: **17.11.1994**
(21) Numéro de dépôt: 90915780.2
(22) Date de dépôt: 09.10.1990
(51) Int. Cl.: H02K 29/00, H02K 16/02

(54) **PERFECTIONNEMENT AU MOTEUR ELECTRIQUE DU TYPE MOTEUR A COURANT CONTINU SANS BALAI**
BÜRSTENLOSER GLEICHSTROMMOTOR
IMPROVEMENT TO ELECTRIC MOTOR OF THE BRUSHLESS DIRECT CURRENT MOTOR TYPE

(30) Priorité: 16.10.1989 FR 8913478
(43) Date de publication de la demande: 02.10.1991
(73) Titulaire: AUXILEC, F-78400 Chatou (FR)
(72) Inventeur: JACQUES, Claude, F-78460 Chevreuse (FR)
(74) Mandataire: Ruellan-Lemonnier, Brigitte
(86) Numéro de dépôt international: FR9000722
(87) Numéro de publication internationale: WO9106147

(56) Documents cités:
- DE-U- 8 503 751
- US-A- 4 223 255
- PATENT ABSTRACTS OF JAPAN, volume 2, No. 56 (E-78)(1475), 24. April 1978, & JP-A-53 21702 (HITACHI SEISAKUSHO K.K.) 28 February 1978

## Description

La présente invention concerne les moteurs électriques du type moteur à courant continu sans balai, elle s'applique aux moteurs synchrones et asynchrones, mais présente de meilleures performances dans le cas des moteurs synchrones.

Les machines synchrones hétéropolaires sont bien connues de l'homme de l'art. Elles sont constituées essentiellement d'une armature portant des pôles inducteurs alternativement nord et sud formant le rotor et une armature ou culasse portant un enroulement induit formant le stator.

Il est connu par le brevet JP-A-5321702 un moteur électrique comportant deux rotors coaxiaux montés sur une pièce d'entraînement fixée à l'arbre moteur et deux stators coaxiaux placés entre les deux rotors et ayant un circuit magnétique commun. Les pôles inducteurs des deux rotors placés sur un même rayon ont le même nom.

La présente invention a pour but un perfectionnement aux moteurs synchrones permettant d'obtenir un moteur synchrone à fort couple et haute compacité améliorant de façon significative la puissance massique et volumique du moteur.

La présente invention a aussi pour but un perfectionnement utilisable dans les moteurs asynchrones.

En conséquence la présente invention a pour objet un moteur électrique du type moteur à courant continu sans balai conforme à la revendication 1.

De préférence, dans le cas des moteurs synchrones, pour diminuer le flux qui se referme dans les culasses des stators, les deux rotors comportent un même nombre de pôles inducteurs.

Selon un mode de réalisation préférentiel, les pôles inducteurs sont réalisés par des aimants permanents.

Pour obtenir des charges linéiques très importantes, les aimants permanents sont, de préférence, des aimants aux terres rares tels que des aimants en samarium-cobalt ou en néodyme fer-bore.

Selon une autre caractéristique de la présente invention, pour permettre l'augmentation de la charge linéique, le moteur comporte de plus des moyens de refroidissement par projection d'un fluide caloporteur. De préférence, les moyens de refroidissement projettent le fluide caloporteur sur les développantes des bobinages d'induit.

D'autres caractéristiques et avantages de la présente invention apparaîtront à la lecture de la description d'un mode de réalisation préférentiel fait ci-après avec référence aux dessins ci-annexés dans lesquels :
- la figure 1 est une vue en coupe axiale schématique de la moitié supérieure d'un moteur synchrone conforme à la présente invention,
- la figure 2 est une vue en coupe axiale schématique du moteur de figure 1 monté dans son carter et muni de moyens de refroidissement conformément à la présente invention, et
- la figure 3 est une vue en coupe radiale schématique d'une partie des rotors et des stators du moteur de figure 1.

Pour simplifier la description, dans les dessins les mêmes éléments portent les mêmes références.

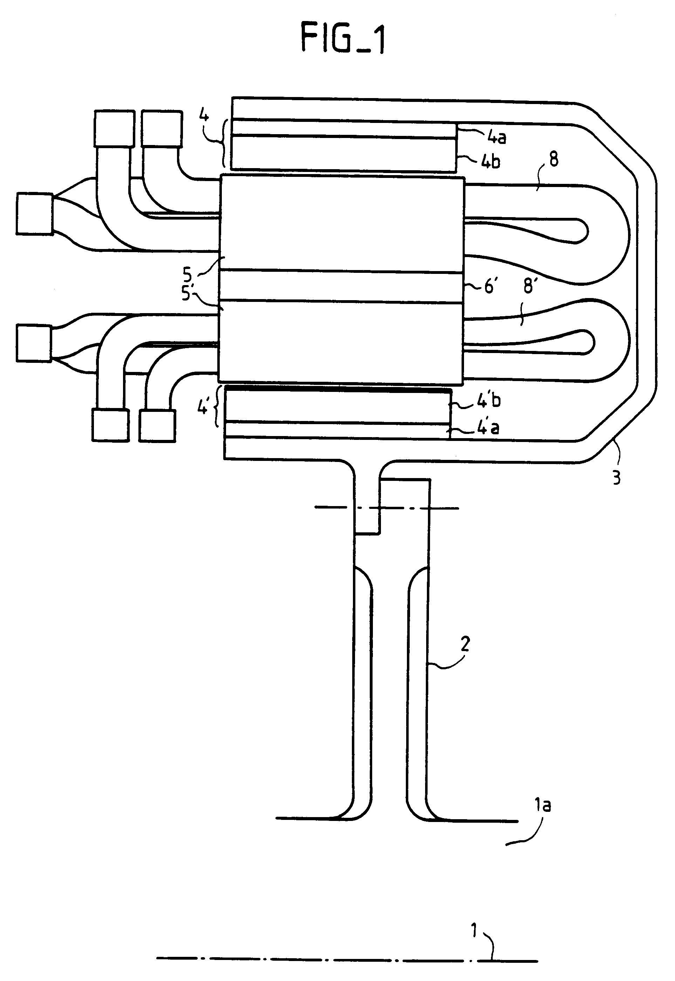

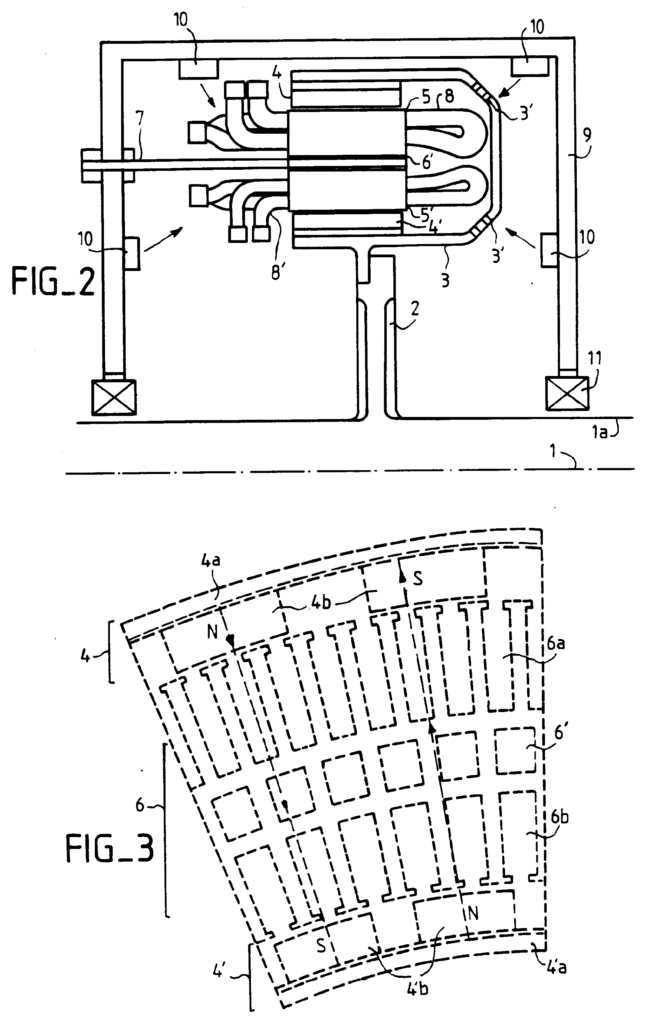

Comme représenté sur la figure 1 qui concerne en fait uniquement la moitié supérieure de la vue en coupe, la référence 1 représente l'axe du moteur et en même temps l'axe de l'arbre 1ₐ entraîné par le moteur synchrone conforme à la présente invention. L'arbre 1ₐ comporte un flasque d'entraînement 2 sur lequel est fixé le moteur proprement dit. Sur le flasque 2 est fixée une pièce d'entraînement 3 sensiblement en forme de C. A l'extrémité des deux branches de la pièce 3 sont fixés respectivement les deux rotors 4, 4′. Chaque rotor est constitué par une armature 4ₐ, 4′ₐ sur laquelle sont fixés des aimants 4_{b}, 4′_{b}. En effet, dans la présente invention les pôles inducteurs sont réalisés par des aimants permanents respectivement nord-sud, comme représenté sur la figure 3. Pour pouvoir obtenir une charge linéique très importante, les aimants permanents sont réalisés en terre rare, de préférence en samarium-cobalt ou en néodyme fer-bore.

Conformément à la présente invention, entre les deux rotors 4 et 4′ sont positionnés deux stators 5 et 5′ présentant un circuit magnétique commun 6 constitué par un empilage de tôles découpées en matériau ferromagnétique tel que du fer. Les tôles découpées présentent en leur centre des fenêtres 6′ dans lesquelles sont insérés des tirants 7 en un matériau amagnétique et isolant électriquement, permettant la fixation du stator sur une partie de la carcasse du moteur comme représenté sur la figure 2. Comme représenté sur les figures 2 et 3, les tôles découpées 6 présentent des encoches supérieures 6ₐ et des encoches inférieures 6_{b} comportant chacune des bobinages en cuivre 8, 8′. Conformément à la présente invention, les bobinages sont donc dédoublés en deux bobinages 8, 8′ qui sont couplés en série phase par phase. Avec cette construction, on obtient deux demi-machines "emboîtées" l'une dans l'autre, coaxiales et à couple moteur additif. Ceci permet l'obtention d'un couple moteur important avec un encombrement minimal.

D'autre part, pour alléger la masse de fer des stators, le nombre de pôles inducteurs du rotor extérieur 4 est choisi égal au nombre de pôles inducteurs du rotor intérieur 4'. De plus, les axes entre pôles de noms contraires sont confondus, comme représenté plus particulièrement sur la figure 3. Cette disposition a pour effet de diminuer le flux qui se referme dans les culasses des stators. En effet, dans ce cas, le flux circule entre les pôles de noms contraires et sur les rotors différents, comme . représenté en pointillés avec des flèches sur la figure 3.

Comme représenté sur la figure 2, le moteur est enfermé dans une carcasse 9 à travers laquelle passe l'arbre d'entraînement 1ₐ avec interposition de roulements à billes 11. Conformément à la présente invention, à l'intérieur de la carcasse 9 sont prévus des moyens de refroidissement 10, plus particulièrement des injecteurs qui permettent de projeter un fluide caloporteur tel que de l'huile sur les développantes des bobinages 8, 8′. Cette technique de refroidissement spécifique qui diminue le gradient thermique, permet l'augmentation de la charge linéique conjuguée avec un accroissement de la densité de courant dans les bobinages 8, 8′ de l'induit. Comme cela est évident pour l'homme de l'art, les injecteurs 10 sont associés avec tout un système d'amenée et de récupération d'huile tel qu'une pompe et un échangeur.

Avec cette technologie, on pulvérise donc de l'huile sous forme de brouillard directement sur les conducteurs de cuivre où se développe généralement la majorité des pertes de la machine par effet joule. Ainsi les pertes prenant naissance dans le cuivre noyé dans les encoches au coeur du circuit magnétique s'évacuent par conduction dans le cuivre lui-même vers les extrémités des développantes des bobinages 8, 8′. On notera donc que la température au coeur du bobinage, c'est-à-dire au sein même du paquet de fer du circuit magnétique, sera plus ou moins élevée suivant l'importance des longueurs linéaires du cuivre hors-fer, rapportées aux longueurs linéaires du cuivre noyé dans le fer. Ceci rend donc "utile" le volume des développantes de bobinage qui normalement présente une masse morte d'un strict point de vue électromagnétique.

On montrera maintenant les avantages d'une machine coaxiale par rapport à une machine unique à un seul entrefer utilisant le diamètre d'entrefer de la demi-machine extérieure en admettant la même technologie de refroidissement, les mêmes niveaux de température ainsi que les mêmes inductions maxima dans les circuits magnétiques. Dans un exemple de réalisation de la présente invention la machine synchrone présente une longueur axiale inférieure d'environ 20 % par rapport à une machine conventionnelle. D'autre part, le dédoublement en deux demi-machines améliore particulièrement l'efficacité du refroidissement. Ce gain est d'environ 85 % et permet d'utiliser une densité de courant supérieure de 36 % avec un même gradient thermique de transfert entre l'huile et le cuivre des bobinages.

Ainsi une machine synchrone conforme à la présente invention permet des gains significatifs d'encombrement dans le sens axial. Elle peut être utilisée pour des fortes charges linéiques avec un refroidissement de grande efficacité. Les densités de courant peuvent être augmentées d'autant plus que le bobinage est dédoublé.

La présente description a été faite en se référant à un moteur synchrone. Toutefois, la présente invention s'applique aussi aux moteurs asynchrones de manière évidente pour l'homme de l'art. Ainsi les deux rotors sont constitués par un circuit magnétique massif ou feuilleté avec cage dite d'écureuil.

## Revendications

1. Moteur électrique du type moteur à courant continu sans balai comportant autour d'un arbre moteur (1a) deux rotors coaxiaux l'un extérieur (4) et l'autre intérieur (4′) montés sur une pièce d'entraînement (3) fixée à l'arbre moteur (1a) et deux stators (5,5′) coaxiaux placés entre les deux rotors (4,4′) et ayant un circuit magnétique commun caractérisé en ce qu'un pôle inducteur de l'un des rotors (4) et un pôle inducteur de l'autre rotor qui se trouvent sur un même rayon sont de noms contraires .

2. Moteur selon la revendication 1, caractérisé en ce que les deux stators (5,5′) comportent des bobinages (8,8′) distincts .

3. Moteur selon l'une des revendications 1 ou 2, caractérisé en ce que dans le cas d'un moteur synchrone, les deux rotors comportent un même nombre de pôles inducteurs (4ₐ, 4_{b}).

4. Moteur selon l'une quelconque des revendications 1 à 3, caractérisé en ce que les pôles inducteurs sont réalisés par des aimants permanents.

5. Moteur selon la revendication 4, caractérisé en ce que les aimants permanents sont des aimants aux terres rares tels que des aimants en samarium-cobalt ou en néodyme-fer-bore.

6. Moteur selon la revendication 1, caractérisé en ce que, dans le cas d'un moteur asynchrone, les deux rotors sont constitués par un circuit magnétique massif ou feuilleté avec cage dite d'écureuil.

7. Moteur selon l'une quelconque des revendications 1 à 6, caractérisé en ce qu'il comporte des moyens de refroidissement (10) par projection d'un fluide caloporteur.

8. Moteur selon la revendication 7, caractérisé en ce que les moyens de refroidissement projettent le fluide caloporteur sur les développantes des bobinages.

## Patentansprüche

1. Bürstenloser Gleichstrom-Elektromotor mit zwei eine Motorwelle (1a) umgebenden, koaxialen Rotoren, und zwar einem äußeren Rotor (4) und einem inneren Rotor (4′), die an einem an der Motorwelle (1a) befestigten Antriebsstück (3) angebracht sind, sowie zwei koaxialen Statoren (5, 5′), die zwischen den beiden Rotoren (4, 4′) angeordnet sind und einen gemeinsamen Magnetkreis aufweisen, dadurch gekennzeichnet, daß ein Induktionspol eines Rotors (4) und ein sich auf demselben Radius befindender Induktionspol des anderen Rotors ungleichnamig sind.

2. Motor nach Anspruch 1, dadurch gekennzeichnet, daß die beiden Statoren (5, 5′) getrennte Wicklungen (8, 8′) aufweisen.

3. Motor nach einem der Ansprüche 1 oder 2, dadurch gekennzeichnet, daß die beiden Rotoren im Falle eines Synchronmotors die gleiche Anzahl von Induktionspolstücken (4ₐ, 4_{b}) aufweisen.

4. Motor nach einem der Ansprüche 1 bis 3, dadurch gekennzeichnet, daß die Induktionspole durch Permanentmagneten gebildet sind.

5. Motor nach Anspruch 4, dadurch gekennzeichnet, daß die Permanentmagnete Magnete aus seltenen Erden sind, z. B. Magnete aus Samariumcobalt oder aus Neodym-Eisen-Bor.

6. Motor nach Anspruch 1, dadurch gekennzeichnet, daß die beiden Rotoren im Falle eines Asynchronmotors durch einen massiven oder geblechten Magnetkreis mit einem sogenannten Käfiganker gebildet sind.

7. Motor nach einem der Ansprüche 1 bis 6, dadurch gekennzeichnet, daß er Mittel (10) zum Kühlen mittels Einspritzen eines Wärmeübertragungsmediums enthält.

8. Motor nach Anspruch 7, dadurch gekennzeichnet, daß die Kühlmittel das Wärmeübertragungsfluid auf die Spulenköpfe der Wicklungen spritzen.

## Claims

1. A brushless electric motor of the DC type, comprising, around a motor shaft (1a), two coaxial rotors, the one (4) being exterior and the other (4′) interior, same being mounted on a driving member (3) secured to the motor shaft (1a) and two coaxial stators (5, 5′) arranged between the two rotors (4, 4′) and having a common magnetic circuit, characterized in that one induction pole of one (4) of the rotors and an induction pole of the other rotor, which are located on the same radius, are of opposite sign.

2. The motor as claimed in claim 1, characterized in that the two stators (5, 5′) comprise separate windings (8, 8′).

3. The motor as claimed in claim 1 or in claim 2, characterized in that in the case of the motor being a synchronous motor, the two rotors comprise the same number of induction poles (4ₐ, 4_{b}).

4. The motor as claimed in any one of the claims 1 through 3, characterized in that the induction poles are made in the form of permanent magnets.

5. The motor as claimed in claim 4, characterized in that the permanent magnets are rare earth element magnets such as samarium-cobalt or neodymium-iron-boron magnets.

6. The motor as claimed in claim 1, characterized in that in the case of the motor being an asynchronous motor, the two rotors are constituted by a solid or laminated magnetic circuit with a squirrel cage.

7. The motor as claimed in any one of the claims 1 through 6, characterized in that it comprises means (10) for cooling by means of a heat vehicle fluid.

8. The motor as claimed in claim 7, characterized in that the cooling means apply the heat vehicle fluid to the end parts of the windings.
